# EUROPEAN PATENT APPLICATION

(11) **EP 4 350 872 A1**
(43) Date of publication of application: **10.04.2024**
(21) Application number: 22810392.5
(22) Date of filing: 13.05.2022
(51) Int. Cl.: H01M 50/533, H01M 50/538, H01M 10/0587, H01M 4/13

(54) **TAB ELECTRODE PLATE AND WOUND BATTERY**

(30) Priority: 28.05.2021 CN 202110588973
(71) Applicant: Microvast, Inc., Stafford, TX 77477 (US)
(72) Inventor: DENG, Guoyou, Huzhou, Zhejiang 313000 (CN); SHEN, Xiaojie, Huzhou, Zhejiang 313000 (CN); JIN, Yong, Huzhou, Zhejiang 313000 (CN); SHEN, Qingyu, Huzhou, Zhejiang 313000 (CN); ZANG, Qingfeng, Huzhou, Zhejiang 313000 (CN)
(74) Representative: Zaboliene, Reda
(86) International application number: PCT/CN2022/092890
(87) International publication number: WO 2022/247665

(57) **Abstract**

The present application provides a tab electrode plate (1), comprising a coating area (11) and an empty foil area (12) located on one side of the coating area (11). The empty foil area (12) comprises a cutting area (121) and a reserved area (122); the cutting area (121) forms a plurality of tabs (14) by cutting; the plurality of tabs (14) are sequentially arranged along a length direction (X) of the tab electrode plate (1), and the ends of the plurality of tabs (14) close to the coating area (11) are connected into one piece by means of the reserved area (122); a partition line (123) is formed at a position where the cutting area (121) and the reserved area (122) are connected; each tab (14) comprises a first edge (141) and a second edge (142) which are opposite to each other, and both the first edge (141) and the second edge (142) intersect with the partition line (123); an included angle a is formed between the first edge (141) and the partition line (123), the included angle a is located in the tab (14), and the included angle a is an acute angle. The present application further provides a wound battery.

## Description

### TECHNICAL FIELD

The present application relates to the technical field of battery technology, and in particular, to a tab plate and a wound battery.

### BACKGROUND

With the development of electronic technology, lithium-ion batteries have been widely used due to their high specific power, long cycle life, good safety performance, and pollution-free advantages. Traditional wound batteries are mainly single tab or multitab wound batteries, while full-tab wound batteries are increasingly recognized due to their low internal resistance and high energy density.

### TECHNICAL PROBLEM

The manufacturing method of full-tab wound batteries usually involves coating one end of the positive and negative electrode plates with active material (the part coated with active material is called the coating area), and leaving the other end as a blank part (the part uncoated with active material, which is called the empty foil area). During the winding process of the positive and negative electrode plates (or after the winding of the positive and negative electrode plates is completed), the full-tab is formed by flattening the blank part.

In the process of bending the blank part inward, in order to flatten the tabs, it is usually necessary to apply significant pressure on the surface perpendicular to the electrode plate (i.e., on the two cylindrical end faces of the cylindrical battery formed after winding), which can easily cause the active materials on the positive and negative electrode plates to fall off, and even cause deformation of the electrode plates, greatly reducing the performance of the wound battery.

### TECHNICAL SOLUTION

The object of the present application is to provide a tab plate and a wound battery, aiming to address the shortcomings of the background mentioned above. By setting the angle a formed between the first side and the partition line to be an acute angle, the rolling pressure required to flatten the tabs can be reduced when the winding direction is the same as the acute angle a, thereby avoiding the deformation of the tab plate and reducing the falling off of the active materials from the positive and negative electrode plates, so as to greatly improve the yield rate of full-tab wound cells. In addition, since there is no need for significant pressure to flatten the tabs, the stress of bending the tabs can be reduced, thereby ensuring the quality of the wound battery. At the same time, the cutting area is separated from the coating area through the reserved area, which can avoid cutting to the coating area during the formation of the tabs by cutting, so as to prevent the active material powder on the coating area from falling off, thereby avoiding the impact on the electrical performance of the tab plate and facilitating the cutting operation. The wound battery not only has a simple design, but also has good electrical performance, high yield rate, and strong practicality.

An embodiment of the present application provides a tab plate, including a coating area and an empty foil area located on one side of the coating area. The empty foil area includes a cutting area and a reserved area. The reserved area is arranged close to the coating area and is located between the coating area and the cutting area. The cutting area is cut to form a plurality of tabs, wherein the plurality of tabs are arranged in sequence along a length direction of the tab plate, and ends of the plurality of tabs close to the coating area are connected together through the reserved area. A partition line is formed at a connection position between the cutting area and the reserved area. Each tab includes a first side and a second side which are oppositely arranged, and both the first side and the second side intersect with the partition line. An angle a is formed between the first side and the partition line, the angle a is located within the tab, and the angle a is an acute angle.

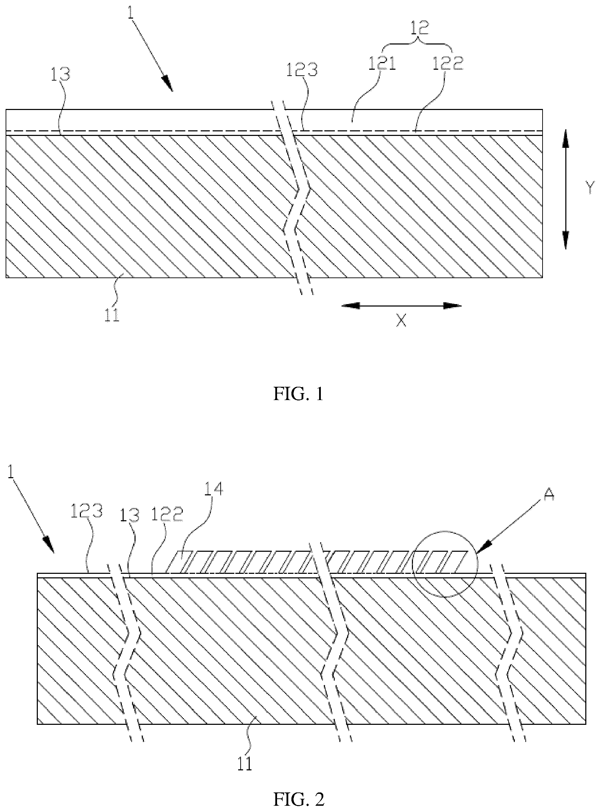

The recitation "the cutting area is cut to form a plurality of tabs" in the present application refers to cutting the entire cutting area to form a plurality of tabs, or cutting the cutting area partially to form a plurality of tabs. As shown in FIG. 2 of the present application, the cutting area is partially cut to form a plurality of tabs.

According to actual operation process, the bending or folding distance of each tab towards the central hole can be consistent or inconsistent; for example, it is possible to fold all tabs with the partition line as the folding line towards the central hole in order to have a uniform bending or folding distance; it is also possible to use the partition line as the folding line for some tabs, while other tabs use any position in the empty foil area as the folding line.

In an achievable manner, the tab plate is a positive electrode tab plate and/or a negative electrode tab plate, and a winding direction of the tab plate is the same as an orientation of the angle a.

In an achievable manner, a boundary line is formed at the connection position between the empty foil area and the coating area, and the distance between the partition line and the boundary line is less than or equal to 5 mm; or the distance between the partition line and the boundary line is greater than or equal to 0.5 mm and less than or equal to 5 mm; or a distance between the partition line and the boundary line is greater than or equal to 0.5 mm and less than or equal to 2 mm.

In an achievable manner, the other angle formed between the first side and the partition line is b, the angle b is located outside the tab, and the angle b is rounded;
and/or, an angle formed between the second side and the partition line is c, the angle c is located outside the tab, and the angle c is rounded. The intersection of the two sides after being rounded is a smooth transition, which is more conducive to reducing the pressure required to flatten the tabs.

In an achievable manner, the other angle formed between the second side and the partition line is d, the angle d is located within the tab, the angle d is a right angle or obtuse angle, and the sum of the angle a and the angle d is less than or equal to 180°.

In an achievable manner, there is a spacing between every two adjacent tabs, and a length of the spacing is 1/100-1 or 1/10-1/2 of a length of the tab. A radius of the rounded angle b is less than the length of the spacing, and a radius of the rounded angle c is less than the length of the spacing.

In an achievable manner, the length of the spacing is 0.1 mm-10 mm; or 1 mm-4 mm; or 0.1 mm-1 mm; or 5 mm-8 mm.

In an achievable manner, the angle a is less than 60°; or the angle a is less than 45°. This angle range is more conducive to reducing the pressure required to flatten the tabs.

In an achievable manner, each tab further includes a third side, the third side intersects with both the first side and the second side, and the third side is arranged opposite to the partition line. An angle formed between the first side and the third side is rounded, and/or an angle formed between the second side and the third side is rounded. The intersection of the two sides after being rounded is a smooth transition, which is more conducive to reducing the pressure required to flatten the tabs and reducing tip discharge.

In an achievable manner, the tab has a quadrilateral structure.

In an achievable manner, the tab has a parallelogram structure.

In an achievable manner, a ratio of the length to the width of each tab is (1-4):2, or (1-3):2, or 0.5:1.

Another embodiment of the present application also provides a wound battery, including a positive electrode tab plate and a negative electrode tab plate, wherein the positive electrode tab plate and/or the negative electrode tab plate are/is the aforementioned tab plate.

In an achievable manner, the wound battery further includes a first separator, and the first separator is sandwiched between the positive electrode tab plate and the negative electrode tab plate. The positive electrode tab plate, the first separator and the negative electrode tab plate are stacked and wound to form a battery cell. The tabs of the positive electrode tab plate and the tabs of the negative electrode tab plate are respectively located at both ends of the battery cell.

In an achievable manner, a distance of the tabs of the positive electrode tab plate beyond a top end of the first separator after being flattened is 0.5-5 mm, and a distance of the tabs of the negative electrode tab plate beyond a bottom end of the first separator after being flattened is less than 5 mm.

### BENEFICIAL EFFECTS

The tab plate provided in the present application sets the angle a formed between the first side of the tab and the partition line as an acute angle. During the process of winding the tab plate to form a battery cell, the winding direction of the tab plate is consistent with the orientation of the acute angle. By bending and flattening the tabs towards the central hole while winding the tab plate, the rolling pressure required for flattening the tabs can be effectively reduced, thereby avoiding the deformation of the tab plate and reducing the falling off of the active material from the electrode plate, so as to greatly improve the yield rate of full-tab wound cells. In addition, since there is no need for significant pressure to flatten the tabs, the stress of bending the tabs 14 can be reduced, thereby ensuring the quality of the wound battery. At the same time, the cutting area is separated from the coating area through the reserved area, which can avoid cutting to the coating area during the formation of the tabs by cutting, so as to prevent the active material powder on the coating area from falling off, thereby avoiding the impact on the electrical performance of the tab plate and facilitating the cutting operation. The wound battery not only has a simple design, but also has good electrical performance, high yield rate, and strong practicality.

### BRIEF DESCRIPTION OF THE DRAWINGS

FIG. 1 is a schematic diagram of the structure of the tab plate before cutting in the first embodiment of the present application.
FIG. 2 is a schematic diagram of the structure of the tab plate after cutting in the first embodiment of the present application.
FIG. 3 is an enlarged schematic diagram of the structure at position A in FIG. 2.
FIG. 4 is a schematic diagram of the structure of a single tab in FIG. 3.
FIG. 5 is a schematic diagram of the three-dimensional structure of the wound battery in the first embodiment of the present application.
FIG. 6 is a top view of FIG. 5.
FIG. 7 is a bottom view of FIG. 5.
FIG. 8 is a schematic diagram of the structure of the positive electrode tab plate in FIG. 5.
FIG. 9 is a schematic diagram of the structure of the negative electrode tab plate in FIG. 5.
FIG. 10 is a schematic diagram of the structure of the tab plate in the second embodiment of the present application.
FIG. 11 is a schematic diagram of the structure of the tab plate in the third embodiment of the present application.
FIG. 12 is a schematic diagram of the structure of the tab plate in the fourth embodiment of the present application.
FIG. 13 is a schematic diagram of the structure of the tab plate in the fifth embodiment of the present application.

### DETAILED DESCRIPTION OF THE EMBODIMENTS

The following will provide a further detailed description of the specific implementations of the present application in conjunction with the accompanying drawings and embodiments. The following embodiments are used to illustrate the present application, but are not intended to limit the scope of the present application.

The terms "first", "second", "third", "fourth", etc. (if any) in the specification and claims of the present application are only used to distinguish similar objects, and are not intended to be used to describe a specific sequence or order.

The terms "up", "down", "left", "right", "front", "back", "top", "bottom" (if any) mentioned in the specification and claims of the present application are defined based on the position of the structure in the figures and the position between the structures in the figures, and only for the clarity and convenience of expressing the technical solution. It should be understood that the use of these directional words should not limit the scope of protection in the present application.

As shown in FIG. 1, an embodiment of the present application provides a tab plate 1, which, before being cut, includes a coating area 11 and an empty foil area 12 located on one side of the coating area 11. A boundary line 13 is formed at the connection position between the empty foil area 12 and the coating area 11. Specifically, the tab plate 1 is a rectangular structure before being cut, with a length direction X and a width direction Y. On the width direction Y of the tab plate 1, the tab plate 1 is divided into a coating area 11 and an empty foil area 12, wherein the coating area 11 is coated with an active material (generally, the active material is in the form of powder), and the empty foil area 12 is not coated with the active material. The empty foil area 12 includes a cutting area 121 and a reserved area 122 (the reserved area 122 will not be cut), the reserved area 122 is arranged close to the coating area 11 and is located between the coating area 11 and the cutting area 121.

As shown in FIGS. 2 to 4, after cutting the tab plate 1, the cutting area 121 is cut to form a plurality of tabs 14 of quadrilateral structure, and the plurality of tabs 14 are arranged in sequence along the length direction X of the tab plate 1. The ends of the plurality of tabs 14 close to the coating area 11 are connected together through the reserved area 122. A partition line 123 (the partition line 123 is represented by a dashed line in FIG. 1) is formed at the connection position between the cutting area 121 and the reserved area 122. Each tab 14 includes a first side 141 and a second side 142 which are oppositely arranged, and both the first side 141 and the second side 142 intersect with the partition line 123. An angle a is formed between the first side 141 and the partition line 123, the angle a is located within the tab 14, and the angle a is an acute angle.

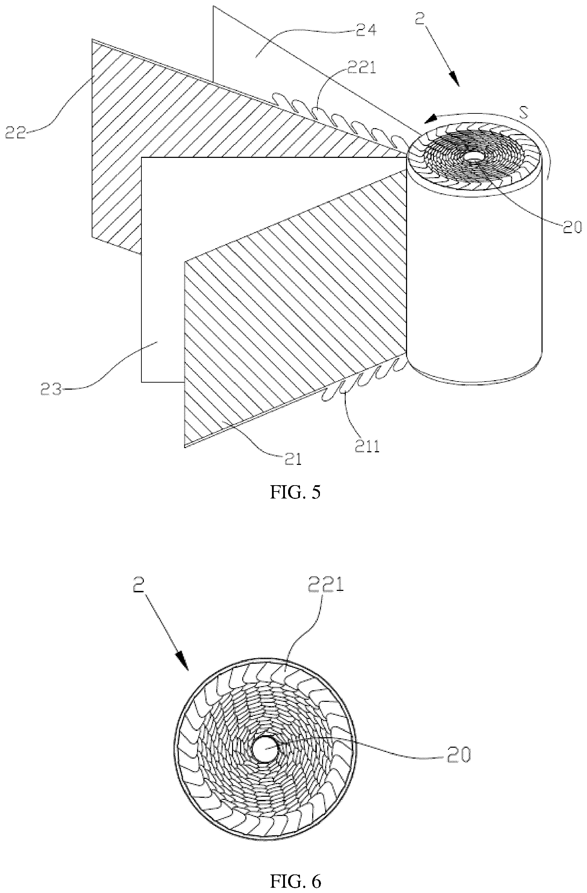

Specifically, the tab plate 1 is a positive electrode tab plate 21 and/or a negative electrode tab plate 22 (the structures of the positive electrode tab plate 21 and the negative electrode tab plate 22 can refer to FIGS. 5, 8, and 9), and the winding direction S of the tab plate 1 is the same as the orientation of the angle a. Referring to FIG. 5, the winding direction S of the positive electrode tab plate 21 and the negative electrode tab plate 22 is counterclockwise as shown in FIG. 5. During the winding process of the positive electrode tab plate 21 and the negative electrode tab plate 22, the orientation of the acute angle a is the same as the winding direction S. In this embodiment, the angle a formed between the first side 141 of the tab 14 and the partition line 123 is set to be an acute angle. During the process of winding the tab plate 1 to form a battery cell, the winding direction S of the tab plate 1 is consistent with the orientation of the acute angle a, and by bending and flattening the tabs 14 towards the central hole while winding the tab plate 1, the rolling pressure required for flattening the tabs 14 can be effectively reduced, thereby avoiding the deformation of the coating area 11 of the tab plate 1 and reducing the falling off of the active material from the tab plate 1, so as to greatly improve the yield rate of full-tab wound cells. At the same time, the cutting area 121 is separated from the coating area 11 through the reserved area 122, which can avoid cutting to the coating area 11 during the formation of the tabs 14 by cutting, so as to prevent the active material powder on the coating area 11 from falling off, thereby avoiding the impact on the electrical performance of the tab plate 1 and facilitating the cutting operation.

As shown in FIG. 1, as an embodiment, the partition line 123 is opposite and parallel to the boundary line 13, and the distance between the partition line 123 and the boundary line 13 is less than or equal to 5 mm, or less than or equal to 3 mm. Alternatively, the distance between the partition line 123 and the boundary line 13 is greater than or equal to 0.5 mm and less than or equal to 5 mm.

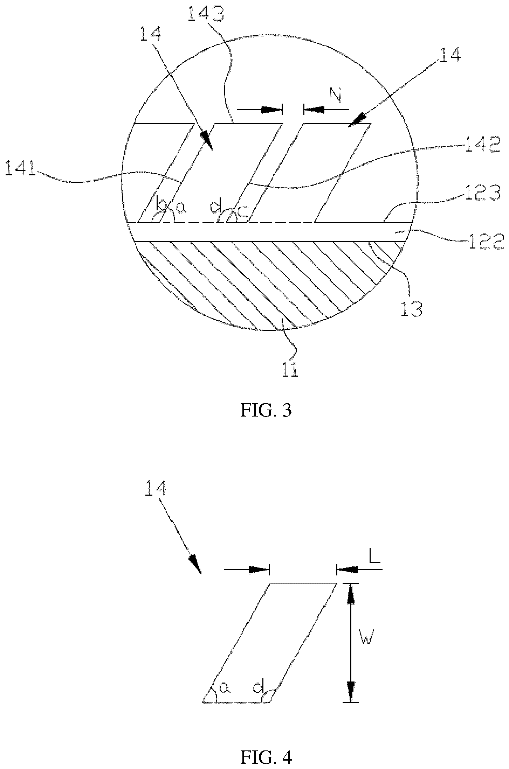

As shown in FIGS. 2 and 3, as an embodiment, each tab 14 also includes a third side 143. The third side 143 intersects with both the first side 141 and the second side 142, and the third side 143 is arranged opposite and parallel to the partition line 123. Of course, in other embodiments, the third side 143 may not be parallel to the partition line 123.

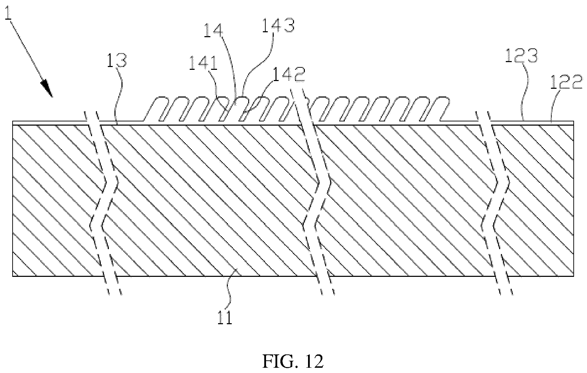

As shown in FIG. 12, as an embodiment, the angle formed between the first side 141 and the third side 143 is rounded, and the angle formed between the second side 142 and the third side 143 is also rounded. The intersection of the two sides after being rounded is a smooth transition, which is more conducive to reducing the pressure required to flatten the tabs 14 and reducing tip discharge.

As shown in FIGS. 3 and 4, as an embodiment, there is a spacing between every two adjacent tabs 14, and the length N of the spacing is 1/10-1/2 or 1/5-1/3 of the length L of the tab 14 (i.e., the length of the third side 143).

As an embodiment, the length N of the spacing is 0.1 mm-10 mm.

As shown in FIG. 3, as an embodiment, the other angle formed between the first side 141 and the partition line 123 (i.e., the angle complementary to the angle a) is b, and the angle b is located outside the tab 14. The angle formed between the second side 142 and the partition line 123 is c, and the angle c is located outside the tab 14.

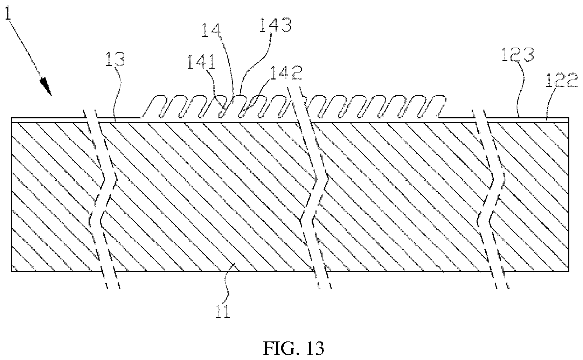

As shown in FIG. 13, and in conjunction with FIG. 3, as an embodiment, both the angle b and the angle c are rounded, with the radius of the rounded angle b being less than the length N of the spacing, and the radius of the rounded angle c being less than the length N of the spacing. After being rounded, the intersection of the two sides is a smooth transition, which is more conducive to reducing the pressure required to flatten the tabs 14.

As shown in FIG. 3, as an embodiment, the other angle formed between the second side 142 and the partition line 123 (i.e., the angle complementary to the angle c) is d, and the angle d is located within the tab 14. The angle d is a right angle or obtuse angle, and the sum of the angle a and the angle d is less than or equal to 180°.

As shown in FIG. 3, as an embodiment, the angle d is an obtuse angle, and the sum of the angle a and the angle d is equal to 180°. That is, in this embodiment, the tab 14 is a parallelogram structure.

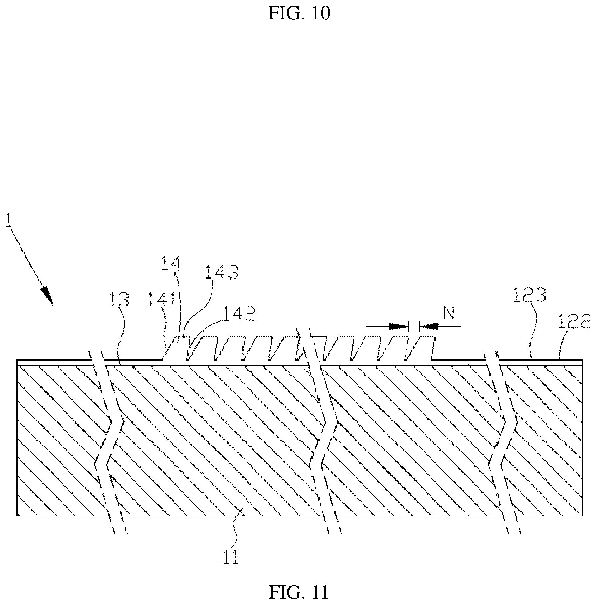

Of course, in other embodiments, the tabs 14 can also be of other shapes, such as a trapezoidal structure. As shown in FIG. 10, the angle formed between the first side 141 and the partition line 123 (i.e., the angle a in FIG. 3) is an acute angle, and the angle formed between the second side 142 and the partition line 123 (i.e., the angle d in FIG. 3) is a right angle, that is, the tab 14 is a right angled trapezoidal structure. Meanwhile, from left to right, in every two adjacent tabs 14, the end of the second side 142 of the previous tab 14 close to the partition line 123 is connected to the end of the first side 141 of the latter tab 14 close to the partition line 123. However, due to the trapezoidal structure of the tabs 14, the end of the second side 142 of the previous tab 14 away from the partition line 123 is separated from the end of the first side 141 of the latter tab 14 away from the partition line 123, and the length N of the spacing is 1/10-1/2 of the length of the third side 143.

As shown in FIG. 11, in another embodiment, the angle formed between the first side 141 and the partition line 123 (i.e., the angle a in FIG. 3) is an acute angle, the angle formed between the second side 142 and the partition line 123 (i.e., the angle d in FIG. 3) is an obtuse angle, and the sum of the acute angle and the obtuse angle is less than 180°, that is, the tab 14 is an obtuse trapezoidal structure. Meanwhile, from left to right, in every two adjacent tabs 14, the end of the second side 142 of the previous tab 14 close to the partition line 123 is connected to the end of the first side 141 of the latter tab 14 close to the partition line 123. However, due to the trapezoidal structure of the tabs 14, the end of the second side 142 of the previous tab 14 away from the partition line 123 is separated from the end of the first side 141 of the latter tab 14 away from the partition line 123, and the length N of the spacing is 1/10-1/2 of the length of the third side 143.

As shown in FIGS. 3 and 4, as an embodiment, the angle a formed between the first side 141 and the partition line 123 is less than 60°.

As another embodiment, the angle a is greater than or equal to 15° and less than or equal to 45°.

As shown in FIG. 4, as an embodiment, the ratio of the length L to the width W of each tab 14 is (1-4):2.

As another embodiment, the ratio of the length L to the width W of each tab 14 is (1-3):2 or 0.5:1.

As shown in FIGS. 5 to 9, this embodiment also provides a wound battery, which includes a positive electrode tab plate 21 and a negative electrode tab plate 22. The positive electrode tab plate 21 and the negative electrode tab plate 22 are both the aforementioned tab plate 1.

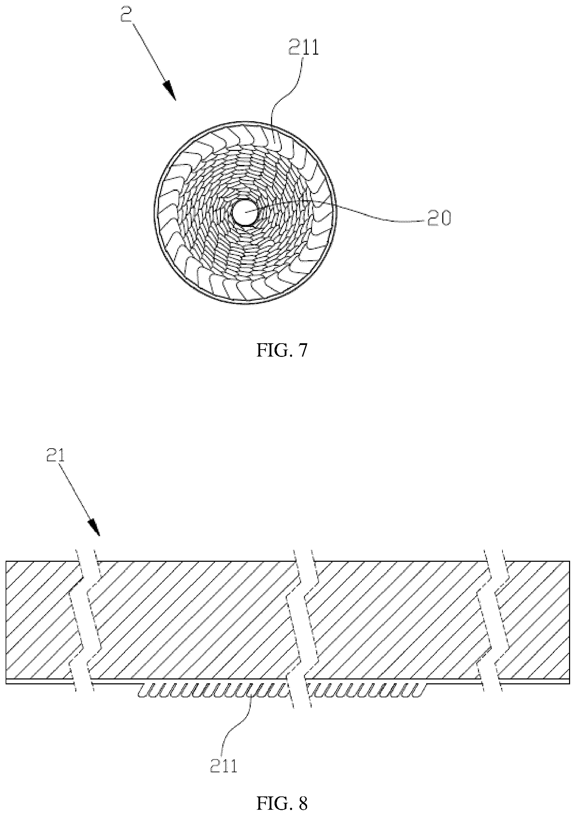

As shown in FIG. 5, as an embodiment, the wound battery also includes a first separator 23, and the first separator 23 is sandwiched between the positive electrode tab plate 21 and the negative electrode tab plate 22. The positive electrode tab plate 21, the first separator 23 and the negative electrode tab plate 22 are stacked and wound to form a battery cell 2. The tabs 211 of the positive electrode tab plate 21 and the tabs 221 of the negative electrode tab plate 22 are respectively located at both ends of the battery cell 2. As shown in FIGS. 6 and 7, after completing the winding and flattening of the tabs 211/221, the tabs 211 of the positive electrode tab plate 21 and the tabs 221 of the negative electrode tab plate 22 are respectively overlapped to form a circular structure.

Specifically, as shown in FIGS. 5, 8, and 9, the orientation of the acute angle on the tabs 211 of the positive electrode tab plate 21 and the orientation of the acute angle on the tabs 221 of the negative electrode tab plate 22 are the same as the winding direction S. During the winding process of the battery cell 2, by flattening the tabs 211/221 towards the central hole 20 while winding the positive and negative electrode tab plates 21/22, the rolling pressure required for flattening the tabs 211/221 can be effectively reduced, thereby avoiding the deformation of the positive and negative electrode tab plates 21/22 and reducing the falling off of the active materials from the positive and negative electrode tab plates 21/22, so as to greatly improve the yield rate of full-tab wound cells.

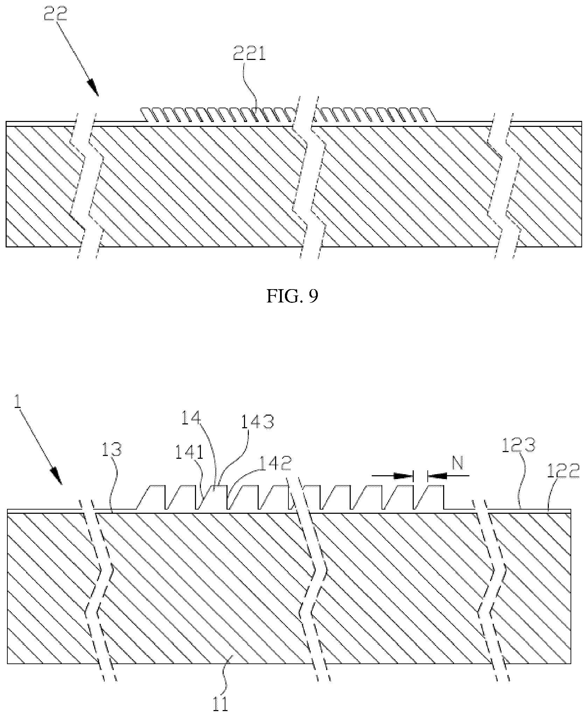

As an embodiment, as shown in FIGS. 8 and 9, both the tabs 211 of the positive electrode tab plate 21 and the tabs 221 of the negative electrode tab plate 22 are rounded. The intersection of the two sides after being rounded is a smooth transition, which is more conducive to reducing the pressure required to flatten the tabs 211/221 and reducing tip discharge.

As an embodiment, the wound battery also includes a second separator 24. The positive electrode tab plate 21, the first separator 23, the negative electrode tab plate 22 and the second separator 24 are sequentially stacked from inside to outside, and are wound to form a battery cell 2 after the four are stacked.

As an embodiment, a distance of the tabs 211 of the positive electrode tab plate 21 beyond a top end of the first separator 23 after being flattened is 0.5-5 mm, and a distance of the tabs 221 of the negative electrode tab plate 22 beyond a bottom end of the first separator 23 after being flattened is less than 5 mm.

As another embodiment, the distance of the tabs 211 of the positive electrode tab plate 21 beyond the top end of the first separator 23 after being flattened is less than 3 mm, and the distance of the tabs 221 of the negative electrode tab plate 22 beyond the bottom end of the first separator 23 after being flattened is less than 3 mm.

As another embodiment, the distance of the tabs 211 of the positive electrode tab plate 21 beyond the top end of the first separator 23 after being flattened is less than 3 mm and greater than 1.5 mm, and the distance of the tabs 221 of the negative electrode tab plate 22 beyond the bottom end of the first separator 23 after being flattened is less than 3 mm and greater than 1.5 mm.

This embodiment also provides a preparation method for a wound battery, and the method specifically includes: coating the positive electrode tab plate 21 and the negative electrode tab plate 22 using a coating machine to ensure that an empty foil area is formed on both the positive electrode tab plate 21 and the negative electrode tab plate 22; cutting the empty foil area(s) of the positive electrode tab plate 21 and/or the negative electrode tab plate 22 into a plurality of quadrilateral tabs 211/221 through laser cutting; then, winding the positive electrode tab plate 21, the negative electrode tab plate 22 and the separator 23/24 into a cylindrical shape, and bending and flattening the tabs 211/221 towards the central hole 20 during the winding process.

The tab plate 1 with tabs provided in this embodiment of the present application sets the tabs 14 in a quadrilateral structure, and the angle a formed between the first side 141 and the partition line 123 is an acute angle. During the process of winding the tab plate 1 to form a battery cell, the winding direction S of the tab plate 1 is consistent with the orientation of the acute angle a. By bending and flattening the tabs 14 towards the central hole while winding the tab plate 1, the rolling pressure required for flattening the tabs 14 can be effectively reduced, thereby avoiding the deformation of the tab plate 1 and reducing the falling off of the active material from the tab plate 1, so as to greatly improve the yield rate of full-tab wound cells. In addition, since there is no need for significant pressure to flatten the tabs 14, the stress of bending the tabs 14 can be reduced, thereby ensuring the quality of the wound battery. At the same time, the cutting area 121 is separated from the coating area 11 through the reserved area 122, which can avoid cutting to the coating area 11 during the formation of the tabs 14 by cutting, so as to prevent the active material powder on the coating area 11 from falling off, thereby avoiding the impact on the electrical performance of the tab plate 1 and facilitating the cutting operation. The wound battery not only has a simple design, but also has good electrical performance, high yield rate, and strong practicality.

The above are only the specific embodiments of the present application, but the scope of protection of the present application is not limited to this. Any technical personnel familiar with this technical field who can easily think of changes or replacements within the scope of technology disclosed in the present application should be covered within the scope of protection of the present application. Therefore, the protection scope of the present application should be based on the protection scope of the claims.

## Claims

1. A tab plate, comprising a coating area (11) and an empty foil area (12) located on one side of the coating area (11), wherein the empty foil area (12) comprises a cutting area (121) and a reserved area (122), the reserved area (122) is located between the coating area (11) and the cutting area (121), the cutting area (121) is cut to form a plurality of tabs (14), wherein the plurality of tabs (14) are arranged in sequence along a length direction (X) of the tab plate (1), and ends of the plurality of tabs (14) close to the coating area (11) are connected together through the reserved area (122); a partition line (123) is formed at a connection position between the cutting area (121) and the reserved area (122), each tab (14) comprises a first side (141) and a second side (142) which are oppositely arranged, and both the first side (141) and the second side (142) intersect with the partition line (123), an angle a is formed between the first side (141) and the partition line (123), the angle a is located within the tab (14), and the angle a is an acute angle.

2. The tab plate as claimed in claim **1,** wherein the tab plate (1) is a positive electrode tab plate (21) and/or a negative electrode tab plate (22), and a winding direction (S) of the tab plate (1) is the same as an orientation of the angle a.

3. The tab plate as claimed in claim **1,** wherein a boundary line (13) is formed at the connection position between the empty foil area (12) and the coating area (11), and a distance between the partition line (123) and the boundary line (13) is less than or equal to 5 mm.

4. The tab plate as claimed in claim **1,** wherein the other angle formed between the first side (141) and the partition line (123) is b, the angle b is located outside the tab (14), and the angle b is rounded;
and/or, an angle formed between the second side (142) and the partition line (123) is c, the angle c is located outside the tab (14), and the angle c is rounded.

5. The tab plate as claimed in claim **4,** wherein there is a spacing between every two adjacent tabs (14), and a length (N) of the spacing is 1/10-1/2 of a length (L) of the tab (14); a radius of the rounded angle b is less than the length (N) of the spacing, and a radius of the rounded angle c is less than the length (N) of the spacing.

6. The tab plate as claimed in claim **5,** wherein the length (N) of the spacing is 0.1 mm-10 mm.

7. The tab plate as claimed in claim **1,** wherein the other angle formed between the second side (142) and the partition line (123) is d, the angle d is located within the tab (14), the angle d is a right angle or obtuse angle, and the sum of the angle a and the angle d is less than or equal to 180°.

8. The tab plate as claimed in claim **1,** wherein each tab (14) further comprises a third side (143), the third side (143) intersects with both the first side (141) and the second side (142), and the third side (143) is arranged opposite to the partition line (123), an angle formed between the first side (141) and the third side (143) is rounded, and/or an angle formed between the second side (142) and the third side (143) is rounded.

9. The tab plate as claimed in claim **1,** wherein the tab (14) has a quadrilateral structure.

10. The tab plate as claimed in claim **9,** wherein the tab (14) has a parallelogram structure.

11. The tab plate as claimed in any one of claims **1** to **10,** wherein a ratio of the length (L) to the width (W) of each tab (14) is (1-4):2.

12. A wound battery, comprising a positive electrode tab plate (21) and/or a negative electrode tab plate (22), wherein the positive electrode tab plate (21) and/or the negative electrode tab plate (22) are/is the tab plate (1) as claimed in any one of claims **1** to **11.**

13. The wound battery as claimed in claim **12,** wherein the wound battery further comprises a first separator (23), the first separator (23) is sandwiched between the positive electrode tab plate (21) and the negative electrode tab plate (22), wherein the positive electrode tab plate (21), the first separator (23) and the negative electrode tab plate (22) are stacked and wound to form a battery cell (2), tabs (211) of the positive electrode tab plate (21) and tabs (221) of the negative electrode tab plate (22) are respectively located at both ends of the battery cell (2); a distance of the tabs (211) of the positive electrode tab plate (21) beyond a top end of the first separator (23) after being flattened is 0.5-5 mm, and a distance of the tabs (221) of the negative electrode tab plate (22) beyond a bottom end of the first separator (23) after being flattened is less than 5 mm.
